# EUROPEAN PATENT APPLICATION

(11) **EP 4 134 724 A1**
(43) Date of publication of application: **15.02.2023**
(21) Application number: 21191351.2
(22) Date of filing: 13.08.2021
(51) Int. Cl.: G02B 21/00, G02B 21/36

(54) **INVERTED LIGHT-SHEET MICROSCOPE**

(71) Applicant: European Molecular Biology Laboratory, 69117 Heidelberg (DE)
(72) Inventor: Hufnagel, Lars, 69181 Leimen (DE); Lin, Yu, 69117 Heidelberg (DE); Kromm, Dimitri, 69117 Heidelberg (DE); Ellenberg, Jan, 69117 Heidelberg (DE)
(74) Representative: Harrison, Robert John

(57) **Abstract**

A microscope (1) for imaging one or more samples (70) is disclosed. The microscope (1) comprises a sample holder (30) comprising a receptacle (40) for holding the one or more samples (70), at least one illumination objective lens (10) for illuminating the one or more samples (70) with an illumination beam in an illumination light path from underneath the sample holder (30) and at least two detection objective lenses (20) arranged at the side of the sample holder (30) and for collecting light emitted from the one or more samples to image the one or more samples (70) with one or more detectors (25).

## Description

### Cross-Reference to Related Applications

**None**

### Background of the invention

Light-sheet microscopy, or selective plane illumination microscopy (SPIM), is a technique in which a plane being in focus of an observation or detection objective lens is illuminated by excitation light through an illumination objective lens. There are two main advantages of the light-sheet microscope compared to epifluorescence microscopes (including confocal microscopes) and these advantages are lower illumination doses which result in a lower phototoxicity, and higher imaging speed for live observations.

European Patent Application No. EP 2 801 855 A1 (EMBL) discloses an inverted configuration of a light-sheet microscope. This configuration allows the observation of a fragile living biological sample held in place by the force of gravity. The sample is placed in a protrusion of a sample holder. The protrusion protrudes into an immersion medium in which the objective lenses are arranged.

An implementation of the inverted light-sheet microscope (Strnad et al., 2016) enables imaging of mouse embryos in their development from zygote to blastocyst, computationally tracking cells of the mouse embryo, and reconstructing a complete lineage tree of mouse pre-implantation development. However, this implementation disclosed in Strnad et al had drawbacks due to accessing the sample optically only from below and merely using a single detection objective. The light efficiency and resolution of this implementation described in the Strnad publication therefore remained limited. It will be noted that fast, high-resolution, three-dimensional live observations, which is one of the strengths of light-sheet microscopy, are not possible using this implementation for many important biological applications, including for example single molecule observations.

The international patent application WO 2019/016359 A1 (Viventis Microscopy) teaches an inverted light-sheet microscope in which two illumination objective lenses are horizontally arranged about a sample holder. A detection objective lens is arranged below the sample holder. The sample holder has a tapering portion and a rounded bottom that form a transparent portion of the sample holder.

The international patent application WO 2019/092132 A1 (Viventis Microscopy) also teaches an inverted light-sheet microscope in which two illumination objective lenses are horizontally arranged about a sample holder. A detection objective lens is arranged below the sample holder. The sample holder has a tapering portion and a rounded bottom that form a transparent portion of the sample holder. The sample holder contains three separation walls creating an array of four compartments linearly arranged in a direction perpendicular to the optical axes of the two illumination objective lenses and the detection objective lens.

Current approaches to observing biological samples are based on epifluorescence, including confocal, or single view inverted light-sheet microscopy.

### Summary of the invention

This disclosure is directed to a microscope for imaging one or more samples. The microscope comprises at least one illumination objective lens for illuminating the one or more samples with an illumination beam along an illumination light path from underneath a sample holder, and at least two detection objective lenses for collecting light emitted from the one or more samples to image the one or more samples with one or more detectors. The sample holder comprises a receptacle for holding the one or more samples.

The receptacle may have an access channel with a wide end and a narrow end for providing access to the receptacle.

In at least a first direction the narrow end of the access channel may have a smaller dimension than the wide end of the access channel. The narrow end may be fluidly connected to the receptacle.

The receptacle is at least partially transparent to the illumination light beam and the light collected from the one or more samples.

The receptacle may be configured to hold the one or more samples such that ones of the one or more samples are arranged along a second direction transverse to the first direction.

The sample holder may comprise a plurality of the receptacle arranged in the second direction and/or a plurality of compartments arranged in the other direction.

The sample holder may be moveable in three dimensions.

The sample holder may be arranged to hold the one or more samples at a bottom of the receptacle in a vertical direction.

The receptacle may have a tube-like shape in the first direction.

The microscope may further comprise a device for chromatically separating and subsequently recombining light collected from the one or more samples.

The microscope may further comprise an electronic confocal slit for suppressing scattered light and enhancing an image contrast of imaging data.

In one aspect, the sample holder is made of a material having a refractive index that matches a refractive index of at least one of the immersion medium and the culture medium.

The microscope may further comprise a tunable acoustic gradient lens arranged in the illumination light path.

The detection objective lens may be mounted to the side of the sample holder and the illumination objective lens may be mounted underneath the sample holder.

The sample holder allows for environmentally controlled culturing of the sample in the culture medium. The sample holder further allows for gravity-based holding of the sample in the inverted, multi-view optical light-sheet microscope. This microscope enables long term culturing of precious biological samples such as live mammalian cells and embryos.

The microscope further enables increased light efficiency and resolution of imaging of the one or more samples by using multiple detection objective lenses with a high numerical aperture (NA). The microscope enables highly sensitive observations of fragile live biological samples including mammalian cells and embryos to be carried out. The improvement in sensitivity and resolution reduces the photo-toxicity and enables extensions of time periods for the observation without perturbing the live samples. This provides a system for live imaging applications, for instance when observing the early development of mammalian oocytes and embryos. Examples of applications include assisted reproductive technologies and IVF approaches. A second observation light path of the microscope also facilitates the imaging of large biological samples, such as 3D cell cultures and organoids. Such large biological samples typically are of medium sizes, i.e., of sizes of approximately 100-500 µm, and require multi-view imaging.

A method of imaging one or more samples is also disclosed. The method comprises accessing a receptacle of a sample holder through an access channel of the sample holder for arranging one or more samples in the receptacle. The access channel has a wide end and a narrow end, wherein in at least a first direction the narrow end has a smaller dimension than the wide end. The narrow end is fluidly connected to the receptacle, and the receptacle is at least partially transparent to an illumination light beam and to light collected from the one or more samples. The method further comprises the steps of arranging the sample holder in a microscope; the step of illuminating the one or more samples; the step of collecting light emitted from the one or more samples; and the step of imaging the one or more samples.

The method may further comprise culturing the one or more samples in the culture medium in the sample holder.

The method may further comprise chromatically separating and subsequently recombining light collected from the one or more samples.

The method may further comprise suppressing scattered light and enhancing an image contrast of imaging data.

The method may further comprise accessing the one or more samples or the culture medium.

The method may further comprise scanning the illumination light beam.

The method may further comprise moving the sample holder to illuminate further ones of the one or more samples.

The disclosure further relates to a use of the microscope of the present disclosure for imaging live biological specimens, such as mammalian cells or embryos.

### Description of the drawings

Fig. 1 shows an overview of the setup of an aspect of the microscope according to the present disclosure.
Fig. 2 shows a detailed view of a section of Fig. 1.
Fig. 3 shows an arrangement of the sample holder, the illumination objective lens and the detection objective lenses of the microscope shown in Fig. 1.
Fig. 4 shows a detailed view of the sample holder.
Fig. 5 shows a top view of the sample holder arranged in the microscope shown in Fig. 1.
Fig. 6 shows a photographic top view of the sample holder of the microscope shown in Fig. 1, with the sample holder moved into a position different from the position shown in Fig. 5.
Fig. 7 shows the improved focusing of a light-sheet achieved with a tunable acoustic gradient (TAG) lens.
Fig. 8 shows a cross-sectional view of an aspect of a method of manufacture of the sample holder.
Fig. 9 shows a cross-sectional view of an aspect of the receptacle including compartments.
Fig. 10 shows an example of a method of imaging one or more samples.

### Detailed description

The invention will now be described on the basis of the drawings. It will be understood that the embodiments and aspects of the invention described herein are only examples and do not limit the protective scope of the claims in any way. The invention is defined by the claims and their equivalents. It will be understood that features of one aspect or embodiment of the invention may be combined with a feature of a different aspect or aspects and/or embodiments of the invention.

The present disclosure teaches an optical configuration that addresses the limitations of the currently known inverted light-sheet microscopes.

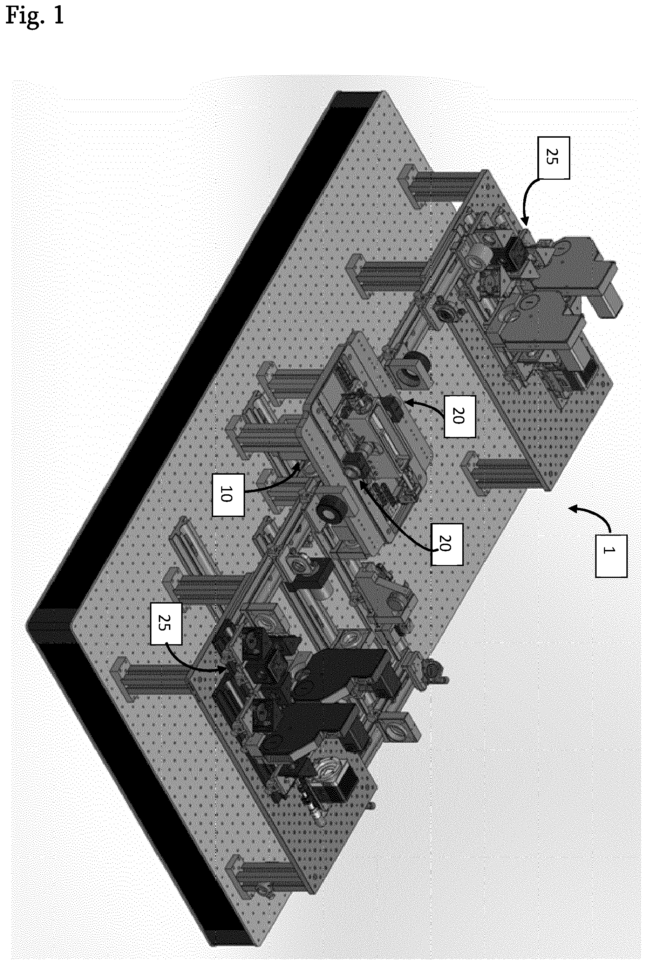

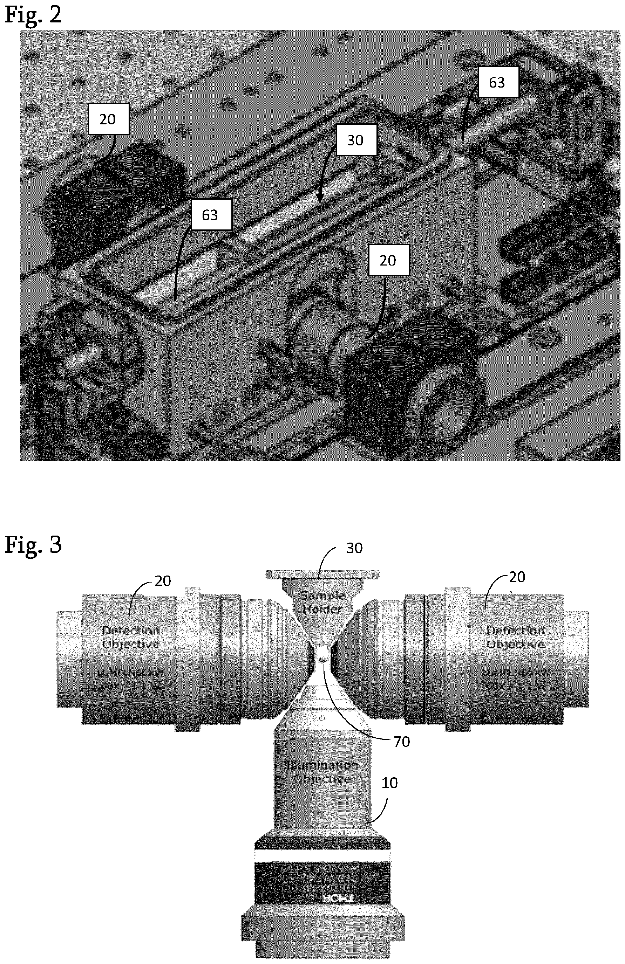

A schematic drawing of an aspect of the microscope 1 according to the present disclosure is shown in Figs. 1-3. Fig. 1 shows an overview of the arrangement. Fig. 2 shows a detailed view of the arrangement of a sample holder 30 and Fig. 3 shows the arrangement of two detection objective lenses 20 and an illumination objective 10. More generally, the microscope 1 comprises the sample holder 30 for holding one or more samples 70 with at least one illumination objective lens 10 for illuminating the one or more samples 70 in the sample holder 30, and at least one detection objective lens 20 for collecting light emitted from the one or more samples 70.

In the aspect of the disclosure shown in Figs. 1-3, the microscope 1 comprises a single illumination objective lens 10 and two detection objective lenses 20. In another aspect of the disclosure, the microscope 1 may comprise two illumination objective lenses 10 and a single detection objective lens 20.

The illumination objective lens 10 is arranged to illuminate the samples 70 in the sample holder 30. An illumination light beam from a light source passes through the illumination objective lens 10 along an illumination light path and impinges on the samples 70. The illumination objective lens 10 focuses the illumination light beam at the sample 70 in at least a first transverse direction of the illumination light path. In one aspect of the disclosure, the illumination objective lens 10 may also focus the illumination light beam at the sample 70 in a second transverse direction of the illumination light path. The second transverse direction may be perpendicular to the first transverse direction.

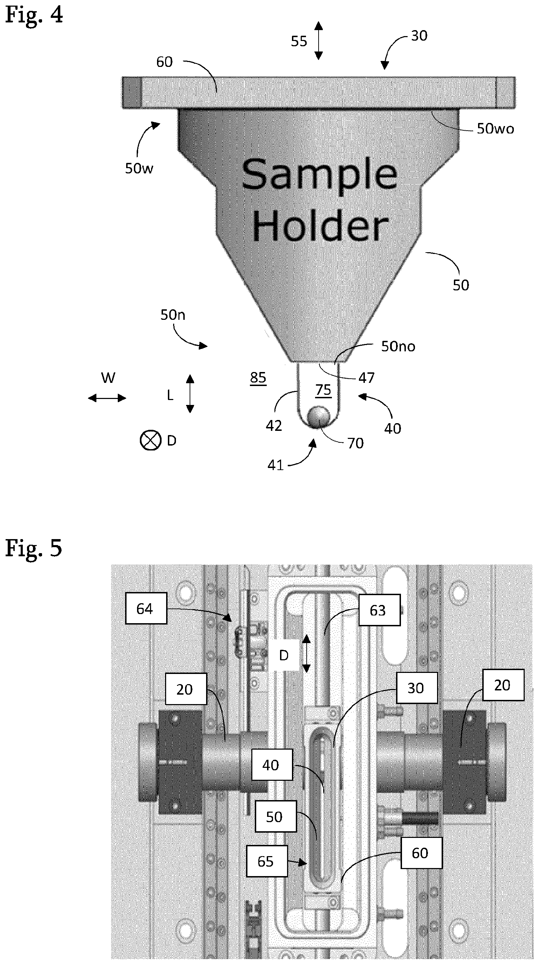

In the aspect of the disclosure shown in Figs. 1-3, the illumination objective lens 10 is arranged below the sample holder 30. In a further aspect, the illumination objective lens 10 may have a low numerical aperture. In yet a further aspect, the illumination objective lens 10 may be arranged in an immersion medium 85 (see Fig. 4).

The illumination light path may further comprise light shaping elements for shaping the illumination light beam at the samples 70 into a light-sheet. The light shaping elements may comprise, for instance, a cylindrical lens. The cylindrical lens focuses the illumination light beam in the first transverse direction.

In an alternative aspect, the light shaping elements may comprise a light shaping scanner that scans the illumination light beam to form the light sheet at the one or more samples 70. The illumination light beam may be focused in both the first transverse direction and the second transverse direction. The light shaping scanner may comprise a scanning mirror, such as a rotating mirror polygon or galvanometric mirror. The light shaping scanner may further comprise a scan lens, such as an F-Theta Lens. The illumination light beam may be scanned transversely to the illumination light beam, e.g., in the first transverse direction and/or the second transverse direction, to form the the light sheet.

In yet an alternative aspect, the light shaping elements may comprise a spatial light modulators (SLMs), which may be used for lattice light-sheets, or digital micromirror devices (DMDs).

The illumination light path may further comprise light positioning elements for positioning the illumination light beam at the one or more samples 70. The light positioning elements may comprise a light positioning scanner to position the illumination light beam at the one or more samples 70 with respect to the one or more samples 70. The illumination light beam may be positioned along the illumination light path or transversely to the illumination light path.

In the example shown in Figs. 1-3, two of the detection objective lenses 20 are arranged to collect in step 830 light from the sample 70. The light collected from the samples 70 passes as two observation light beams through the two detection objective lenses 20. It will be appreciated that the number of observation objective lenses 20 might be larger than two, for instance four. The number of observation light beams corresponds to the number of detection objective lenses 20.

In the aspect of the disclosure shown in Figs. 1-3, the detection objective lenses 20 are disposed at two opposite sides of the sample holder 30. The one or more detection objective lenses 20 may be arranged in a horizontal plane. The one or more detection objective lenses 20 may have coinciding optical axes. The detection objective lenses 20 have in one aspect a high magnification and/or a high numerical aperture. The magnification may be 60x, and the numerical aperture may be 1.1. However, the magnification and the numerical aperture are not limited thereto. The detection objective lenses 20 may be arranged in the immersion medium 85.

The detection objective lenses 20 are arranged in observation light paths. The observation light beams travel along the observation light paths to one or more detectors 25. The one or more detectors 25 generate in step 840 imaging data from the observation light beams. In an aspect, the one or more detectors 25 are CMOS detectors, e.g., back-thinned CMOS detectors or back-illuminated CMOS detectors. The deployment of one or more, e.g., back-thinned or back-illuminated, CMOS detectors enables achieving high quantum efficiency.

An imaging processor (not shown) subsequently processes in step 850 the imaging data generated by the one or more detectors 25 and produces an image of the one or more samples 70.

In another aspect of the disclosure, the observation light paths may lead to several ones of the one or more detectors 25 and result in several sets of the imaging data, generated by the several ones of the detectors 25 from the observation light beams. The several sets of the imaging data are subsequently processed 850 by the imaging processor and fused in step 860 to produce in step 870 the image of the one or more samples 70.

When the two detection objective lenses 20 are arranged to collect light from the one or more samples 70 (as seen in Fig. 1), the total amount of light collected is increased. Such a dual view arrangement further enables viewing the illuminated focal plane from two different directions and improves the resolution of the image volume after image stack fusion in the imaging processor.

The sample holder 30 holds the one or more samples 70 and is at least partially transparent to the light from the light source 35. The illumination light beam from the illumination objective lens 10 passes through the at least partially transparent sample holder 30 to illuminate the one or more samples 70. The light from the one or more samples 70 passes through the at least partially transparent sample holder 30 prior to being collected by the detection objective lenses 20.

The sample holder 30 comprises in one aspect a receptacle 40 (see Fig. 4) and the one or more samples 70 are arranged in the receptacle 40, for instance at a bottom 41 of the receptacle 40 The bottom 41 of the receptacle 40 may be rounded or flat.

As noted above, side walls 42 and the bottom 41 of the receptacle 40 are at least partially transparent. The illumination light beam from the illumination objective lens 10 passes through the at least partially transparent receptacle 40 of the sample holder 30 to illuminate in step 820 the one or more samples 70. Light collected from the illuminated samples 70 passes through the at least partially transparent receptacle 40 of the sample holder 30 prior to being collected by the observation objective lenses 20.

The receptacle 40 of the sample holder 30 has an opening 47 at the top to provide access to the one or more samples 70 held in the receptacle 40. The samples in the receptacle 40 are held in a culture medium 75 (see Fig. 4) and the opening 47 enables therefore access to the one or more samples 70 as well as to the culture medium 75. Chosen ones of the one or more samples 70 may be accessed through the opening 47 of the receptacle 40, e.g., for repositioning or removing the one or more samples 70. The culture medium 75 may be accessed through the opening 47 of the receptacle 40, e.g., for replacing or, by adding, e.g., nutrients, changing the culture medium 75.

The receptacle 40 of the sample holder 30 has a longitudinal axis. The receptacle 40 may have an elongated shape that is elongate in a longitudinal direction L along the longitudinal axis. The longitudinal direction L of the receptacle 40 may be arranged along a vertical direction or direction of gravity. The receptacle 40 has side walls 42 that are arranged in this example substantially vertically and the receptacle also has a bottom 42. Vertically arranged side walls 42 of the receptacle 40 reduce refraction of light passing perpendicularly through the vertically arranged side walls 42.

The receptacle 40 may be manufactured as a one-piece member that comprises the side walls 42 and the bottom 41. The receptacle 40 may be manufactured from fluorinated ethylene propylene (FEP). The use of FEP enables achieving a refractive index of the receptacle 40 that matches the refractive index of an aqueous solution, such as the culture medium 75 or the immersion medium 85.

A width of the receptacle 40 in a width direction W is, in this example, smaller than a length of the receptacle 40 in the longitudinal direction L. The width direction W of the receptacle 40 is transverse to the longitudinal direction L and parallel to the optical axes of the observation objective lenses 20, when the observation objective lenses 20 are arranged horizontally. The width of the receptacle 40 may be dimensioned such that a single one of the one or more samples 70 may be accommodated by the receptacle 40 within its width (as shown in Fig. 4). The receptacle 40 may have a shape that is tube-like in the width direction W.

In one aspect of the disclosure, a depth of the receptacle 40 in a depth direction D may be smaller than the length of the receptacle 40 in the longitudinal direction L, e.g., approximately equal, or similar in size to the width of the receptacle 40 in the width direction W. The depth direction D of the receptacle 40 is transverse to the longitudinal direction L and the width direction W of the receptacle 40. In this aspect, the depth of the receptacle 40 may, for instance, be similarly dimensioned as the width of the receptacle 40, such that the receptacle 40 has a tube-like shape both in the width direction W and the depth direction D. In this aspect of the disclosure, further ones of the observation objective lenses 20 may be arranged about the sample holder 30 and/or about the receptacle 40 of the sample holder 30 to image the one or more samples 70. For example, one or two of the observation objective lenses 20 may be disposed such that their optical axes are arranged in the depth direction D. For example, four observation objective lenses 20 may be arranged about the sample holder 30 and/or about the receptacle 40.

In a further aspect of the disclosure, in which the depth of the receptacle 40 in the depth direction D is smaller than the length of the receptacle 40 in the longitudinal direction L, the sample holder 30 may comprise a plurality of the receptacle 40. The plurality of the receptacle 40 may be arranged along an axis in the depth direction D. For instance, the sample holder 30 may have a plurality of the receptacle 40 having the tube-like shape. In this aspect of the disclosure, high-throughput imaging of the one or more samples 70 is enabled by imaging sequentially the samples 70 arranged in the plurality of the receptacle 40.

In yet another aspect of the disclosure, the depth of the receptacle 40 may be similar to or larger dimensioned than the length of the receptacle 40 in the longitudinal direction L. In this aspect, the one or more samples 70 may be arranged in the depth direction D such that the samples 70 may be illuminated and imaged one after the other. In this aspect of the disclosure, the receptacle 40 may have a plurality of compartments 48 (e.g., pockets or wells) arranged along the axis of the depth direction D (see below). Ones of the samples 70 may be arranged in different ones of the compartments 48 for culturing the samples 70 in separate ones of the culture medium 75. In this aspect of the disclosure, high-throughput imaging of the one or more samples 70 is enabled.

In a further aspect of the disclosure, the sample holder 30 has an access channel 50, as shown in Fig. 4. The access channel 50 may be, at least in sections, e.g., conical or pyramidal, as seen in the width direction W in Fig. 4. The sample holder 30 may be substantially funnel-shaped in the width direction W. Providing the sample holder 30 with the access channel 50 facilitates the depth of the receptacle 40 in the depth direction D being larger than the length of the receptacle 40 in the longitudinal direction L. Providing the sample holder 30 with the access channel 50 furthermore enables the receptacle to protrude from the access channel 50, for instance in the longitudinal direction L, thus increasing the surface of the receptacle 40 that is usable and for illumination and/or detection. The increased surface of the receptacle 40 allows, e.g., for enlarged ones of the one or more samples 70 to be used for illumination and/or detection.

The access channel 50 of the sample holder 30 has a narrow end 50n and a wide end 50w, wherein the narrow end 50n has a smaller dimension in the width direction W than the wide end 50w. The narrow end 50n and the wide end 50w are disposed opposite to each other along an access direction 55 or channel direction 55. The narrow end 50n and the wide end 50w are fluidly connected to each other along the access direction 55 or channel direction 55. The width of the access channel 50 may change along the access direction 55. The width of the access channel 50 at the narrow end 50n is smaller than the width of the access channel 50 at the wide end 50w. In one aspect of the disclosure, the width of the access channel 50 at least partially tapers along the access direction 55 or channel direction 55 (see Fig. 4). In other words, the width of the access channel 50 in the width direction W decreases at least in sections along an access path defined by the access direction.

The access channel 50 is open at the narrow end 50n and the wide end 50w. The access channel 50 has openings 50no and 50wo at the narrow end 50n and the wide end 50w, respectively. The opening 50wo of the access channel 50 at the wide end 50w enables access through the access channel 50 to the one or more samples 70 as well as to the culture medium 75 located in the receptacle 40, e.g., for repositioning or removing the one or more samples 70. The culture medium 75 may be accessed through the opening 50wo of the wide end 50w, e.g., for replacing or, by adding, e.g., nutrients, changing the culture medium 75.

A size of the opening 50no of the narrow end 50n of the access channel 50 substantially matches the size of the opening 47 of the receptacle 40. The open narrow end 50n of the access channel 50 of the sample holder 30 is fluidly connected to the receptacle 40 of the sample holder 30 at the opening 47 of the receptacle 40. In this aspect of the disclosure, the sample holder 30 in the width direction W has substantially funnel-like shape, except for the closed bottom of the receptacle 40. The access channel 50 and the receptacle 40 may be connected or attached to each other by gluing or by clamping, for instance by means of a mechanical clamp arranged in the access channel 50.

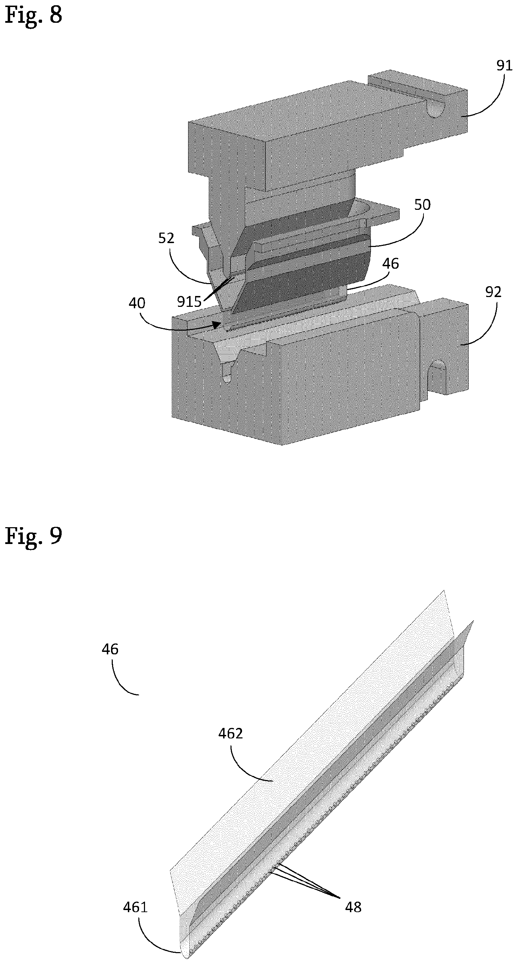

A method of manufacture of the sample holder 30 is disclosed. In one aspect, the receptacle 40 is made from a foil 46 (see Figs. 8 and 9). The foil 46 may be an FEP foil. During manufacture of the sample holder 30, the foil is shaped and attached to the access channel 50.

The foil 46 is positioned above the opening 50wo at the wide end 50w of the access channel 50 and moved into the access channel 50. A first portion 461 (see Fig. 9) of the foil 46 is moved through the opening 50no at the narrow end 50n of the access channel 50 and is brought into a substantially U-shaped form (as seen in a cross-section of the foil 46 in the width direction W). A second portion 462 (see Fig. 9) of the foil 46 is brought into contact with an inner wall 52 of the access channel 50, or a portion of the inner wall 52, to which a glue has been applied. The glue is subsequently dried or let to dry. The glue may be a biocompatible glue.

A stamp 91 (see Fig. 8) may be used to bring the first portion 461 of the foil 46 into the substantially U-shaped form and to attach the second portion 462 of the foil 46 to the inner wall 52 of the access channel 50 or the portion thereof. The stamp 91 has a substantially U-shaped portion that comes into contact with an inner surface of the first portion 461 of the foil 46 to shape the first portion 461 of the foil 46. The inner surface of the first portion 461 of the foil 46 is the surface of the foil 46 that faces the one or more samples 70, when the one or more samples 70 are arranged in the receptacle 40 made from the foil 46.

A counter-stamp 92 (see Fig. 8) to the stamp 91 has a portion having a substantially negative form of the substantially U-shaped portion of the stamp 91. The counter-stamp 92 may be pressed against an outer surface of the first portion 461 of the foil 46. The outer surface of the first portion 461 of the foil 46 is opposite the inner surface of the first portion 461 of the foil 46. The stamp 91 and the counter-stamp 92 thus bring the foil 46 into the substantially U-shaped form.

The stamp 91, the counter-stamp 92, and the foil 46 may be heated during the shaping of the foil 46 and/or during the attaching o the foil 46 to the access channel 50.

In an alternative aspect, or additionally to previous steps, a differently shaped one of the stamp 91 having extrusion 915 (see Fig. 8) may be used. The stamp 91 having the extrusions 915 for forming the compartments 48 (e.g., pockets or wells) may be pressed against the first portion 461 of the foil 46 to form the compartments 48 (e.g., pockets or wells). For example, the different one of the stamp 91 may be inserted into the substantially U-shaped foil 46 and form the compartments 48 (e.g., pockets or wells) by pressing the stamp 91 having the extrusion 915 against the foil 46. In the alternative aspect, the stamp 91 having the extrusion 915 additionally shapes the first portion 461 of the foil 46 to have a substantially U-shaped form.

The compartments 48 may be regularly positioned in the receptacle 40, e.g., linearly in the depth direction D. The compartments 48 enable precise and reproduceable positioning of the one or more samples 70 in the sample holder 30, e.g., in the depth direction D.

In an alternative aspect of the disclosure, in which the sample holder 30 has a plurality of the receptacles 40, the access channel 50 of the sample holder 30 may have a plurality of the opening 50no at the narrow end 50n of the access channel 50. Ones of the plurality of the opening 50no are fluidly connected to ones of the plurality of the receptacle 40 at the opening 47 of the receptacle 40.

In the aspect of the disclosure, in which the depth D of the receptacle 40 is smaller than the length of the receptacle 40 in the longitudinal direction L, for instance equal to the width of the receptacle 40 in the width direction W, the sample holder 30 has, depending on the ratio of the width and the depth of the receptacle 40, substantially the shape of, for instance, a common kitchen funnel, e.g., of a rotationally symmetric funnel.

In the aspect of the disclosure, in which the depth D of the receptacle 40 is substantially equal to or larger than the length of the receptacle 40 in the longitudinal direction L, the sample holder 30 has substantially the shape of a funnel stretched or elongated in the depth direction D, e.g., substantially the shape of a trough-like funnel.

The sample holder 30 protrudes into a space between the observation objective lenses 20 and/or the illumination objective lens 10, as seen in Fig. 1 and 3. In one aspect, the sample holder 30 protrudes into the space between the observation objective lenses 20 and above the illumination objective lens 10. In the aspect of the disclosure shown in Fig. 2, the sample holder 30 is arranged in step 810 in the microscope 1 such that the access channel 50 protrudes from above into the space between the observation objective lenses 20 and towards the illumination objective lens 10. This arrangement enables illuminating the one or more samples 70 by means of the illumination objective lens 10 and observing the samples 70 by means of the observation objective lenses 20. In this aspect, the receptacle 40 intersects the optical axes of the observation objective lenses 20. This arrangement of the receptacle 40 enables positioning of the one or more samples 70, which are located in the receptacle 40, at the optical axes of the observation objective lenses 20.

In one aspect, the space between the observation objective lenses 20 is filled with the immersion medium 85. The space between the observation objective lenses 20 and above the illumination objective lens 10 can also be filled with the immersion medium 85. The sample holder 30 protrudes into the immersion medium 85 and displaces a portion of the immersion medium 85. The displacement of the immersion medium 85 enables fluid contact between the receptacle 40 and the immersion medium 85 without having to rely on surface tension of the immersion medium 85 to provide for the fluid contact by wetting the receptacle 40.

A refractive index of the at least partially transparent receptacle 40 of the sample holder 30 matches a refractive index of an immersion medium 85 and/or a refractive index of a culture medium 75.

The microscope 1 may further comprise a frame 60 as shown in Fig. 5 that supports the access channel 50 of the sample holder 30. In one aspect of the disclosure, the frame 60 comprises a plate that has an opening 65, into which the access channel 50 of the sample holder 30 is inserted to hold the sample holder 30. The narrow end of access channel 50 of the sample holder 30 is inserted into the opening 65 of the frame 60 from above. When the access channel 50 has been inserted, the sample holder 30 is held by the frame 60 in the opening 65 of the frame 60 at the wide end 50w of the access channel 50. When the sample holder 30 is held by the frame 60, the receptacle 40 is arranged such that the illumination light beam from the illumination objective lens 10 illuminates the one or more samples 70. When the sample holder 30 is held by the frame 60, the receptacle 40 is arranged such that the light emitted from the one or more samples 70 is collected by the at least one detection objective lens 20.

In one aspect of the disclosure, the sample holder 30 may be removably arranged in the microscope 1. For instance, the sample holder 30 may be removably arranged in the frame 60 of the microscope 1. The removability of the sample holder 30 enables culturing the one or more samples 70 prior to imaging with the microscope 1. The culturing of the one or more samples 70 prior to imaging enables high-throughput imaging with the microscope 1.

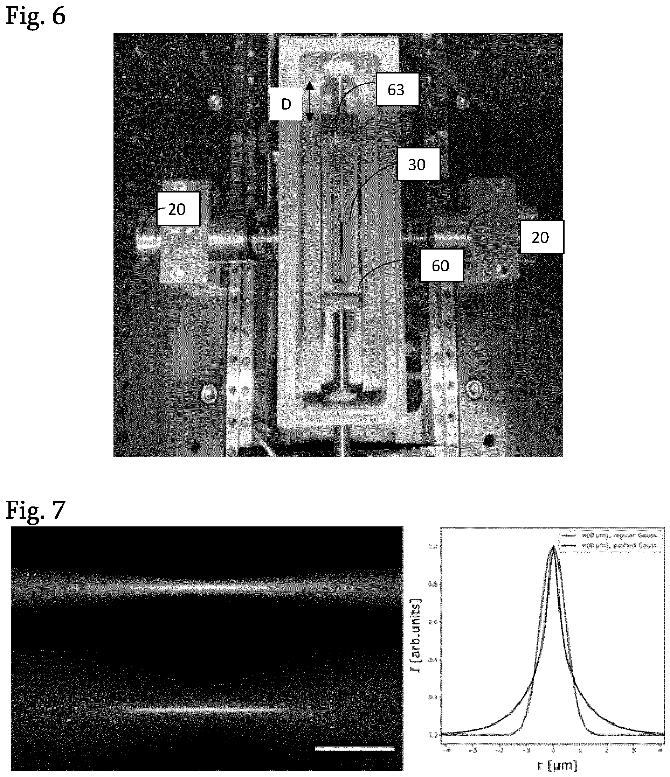

The microscope 1 may further comprise a beam 63 that supports the sample holder 30. The beam 63 may be arranged substantially horizontally. The beam 63 is configured to be moved in three dimensions. The beam 63 is configured to be moved by at least one motor 64 to move in step 880 the sample holder 30, e.g., in the depth direction D. Figs. 5 and 6 show two different ones of the possible positions, into which the sample holder 30 is moveable. In one aspect of the disclosure, the beam 63 comprises teeth that engage with a gear of the at least one motor 64 that is rotated by the motor. In another aspect of the disclosure, the beam 63 may be connected to a belt wound around pulleys that are rotated by the at least one motor 64.

The microscope 1 may comprise at least one second motor (not shown) for moving the beam 63 in the longitudinal direction L. The microscope 1 may comprise at least one third motor (not shown) for moving the beam 63 in the width direction W.

In one aspect of the disclosure, a first section of the beam 63 is attached to a first end of the frame 60 of the sample holder 30 and a second section of the beam 63 is attached to the sample holder 30 at another second end disposed opposite to the first end.

The access channel 50 of the sample holder 30 is arranged in the frame 60 of the sample holder 30 such that sample holder 30 is moveable in the depth direction D of the receptacle 40. The sample holder 30 is moveable with respect to the illumination objective lens 10 and the detection objective lenses 20. In one aspect of the disclosure, the direction of the moveability is orthogonal to a plane, in which the illumination objective lens 10 and the observation objective lenses 20 are arranged, as shown in Fig. 3. The moveability of the sample holder 30 enables sequential imaging of the one or more samples 70 arranged in the receptacle 40 of the sample holder 30 in the depth direction D of the receptacle 40. The sequential imaging enables high-throughput imaging.

The matching refractive indices of the receptacle 40, the immersion medium 85, and/or the culture medium 75 reduce refraction at the boundaries between the receptacle 40, the immersion medium 85, and/or the culture medium 75. It is known that light is refracted at such boundaries and the degree of refraction depends on the differences in the refractive indices when light travels between the objective lenses and the sample, i.e., when illumination light travels from the illumination objective lens 10 to the sample or light emitted from the sample travels to the detection objective lenses 20. The more similar the refractive indices, i.e., the better the match of the refractive indices, on either side of one of the boundaries, the less refraction occurs when light travels across the boundary.

In one aspect of the disclosure, the observation light beam collected from the one or more samples 70 is chromatically separated and recombined at the one or more detectors 25. The separation and recombination of the observation light beam may be done for both of the two detection objective lenses 20, shown in Figs. 1-3. Thereby, simultaneous multi-color observation, e.g., four color imaging, is enabled. In a further aspect, varying detection schemes may be employed by using different specifications, e.g., different magnifications, for the two detection objective lenses 20.

The observation light path of the microscope 1 may further comprise an electronic confocal slit (Medeiros et al., 2015), which suppresses scattered light and further enhances an image contrast of the imaging data. The electronic confocal slit is achieved by controlling the operation mode of the one or more detectors 25, which may in this aspect be CMOS sensors. The controlling of the operation mode of the one or more detectors 25 may implement an electronic mask by means of the one or more detectors 25.

The illumination light path of the microscope 1 may further comprise a tunable acoustic gradient lens or TAG lens (Power and Huisken, 2018) to scan the illumination light beam, focused in at least the first transverse direction or focused in both the first transverse direction and the second transverse direction, along the illumination light path. In one aspect, the beam waist (i.e., the thinnest portion about the focus of the illumination light beam) of the light-sheet is scanned along the illumination light path. The tunable acoustic gradient lens enables moving a thinner one of the light-sheet across the whole field of view or adaptively scanning the light-sheet in three dimensions through the one or more samples 70 (see Fig. 7).

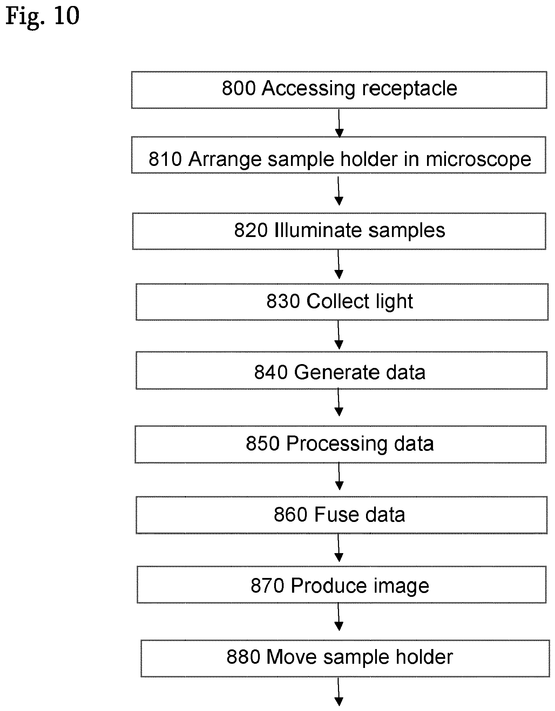

Fig. 10 shows an example of a method of imaging of the samples 70. The method comprises in a first step 800 accessing the receptacle 40 through the access channel 50 of the sample holder 30 to arrange one or more of the samples 70 in the receptacle 40. In a next step 810, the sample holder 30 is arranged in the microscope and in step 820 the samples 70 are illuminated through the illumination objective lens 10. The light emitted from the one or more samples 70 is collected through the detection objective lens(es) 20 in step 830 and passed to the one or more detectors 25. The one or more detectors 25 generate the imaging data from the observation light beams in step 840 and passed in step 850 to a processor. The processor fuses the individual images in step 860 to produce a final image of the one or more samples 70.

**List of reference numerals**

| | |
|---|---|
| Microscope | 1 |
| Illumination objective lens | 10 |
| Detection objective lens | 20 |
| Detector | 25 |
| Sample holder | 30 |
| Light source | 35 |
| Receptacle | 40 |
| Bottom of receptacle | 41 |
| Side walls of receptacle | 42 |
| Foil | 46 |
| First portion of foil | 461 |
| Second portion of foil | 462 |
| Opening of receptacle | 47 |
| Compartments | 48 |
| Access channel | 50 |
| Narrow end | 50n |
| Opening at narrow end | 50no |
| Wide end | 50w |
| Opening at wide end | 50wo |
| Inner wall | 52 |
| Access direction or channel direction | 55 |
| Frame | 60 |
| Beam | 63 |
| Motor | 64 |
| Opening | 65 |
| Sample | 70 |
| Culture medium | 75 |
| Immersion medium | 85 |
| First stamp | 91 |
| Extrusions | 915 |
| Counter-stamp | 92 |
| Longitudinal direction | L |
| Width direction | W |
| Depth direction | D |

### Bibliography

- Strnad et al, 2016, Nature Methods 13(2):139-42
- Medeiros et al., 2015, Nature Communications 6:8881
- Power and Huisken, 2018, Scientific Reports, 8:9615

## Claims

1. Microscope (1) for imaging one or more samples (70) and comprising
- a sample holder (30) comprising a receptacle (40) for holding the one or more samples (70);
- at least one illumination objective lens (10) for illuminating the one or more samples (70) with an illumination beam along an illumination light path from underneath the sample holder (30);
- at least two detection objective lenses (20) arranged at the side of the sample holder (30) and for collecting light emitted from the one or more samples (70) to image the one or more samples (70) with one or more detectors (25).

2. The microscope (1) of claim 1, wherein the receptacle has an access channel (50) with a wide end (50w) and a narrow end (50n) for providing access to the receptacle, wherein in at least a first direction (W) the narrow end (50n) of the access channel (50) has a smaller dimension than the wide end (50w) of the access channel (50), the narrow end (50n) is fluidly connected to the receptacle (40), and the receptacle (40) is at least partially transparent to the illumination light beam and the light collected from the one or more samples (70).

3. The microscope (1) of claim 1 or 2, wherein the receptacle (40) is configured to hold the one or more samples (70) such that ones of the one or more samples (70) are arranged along a second direction (D) transverse to the first direction (W).

4. The microscope (1) of claim 3, wherein the sample holder (30) comprises a plurality of the receptacles (40) arranged in the second direction (D).

5. The microscope (1) of claim 3, wherein the receptacle (40) comprises a plurality of compartments arranged in the second direction (D).

6. The microscope (1) of any one of claims 3 to 5, wherein the sample holder (30) is moveable in the three dimensions.

7. The microscope (1) of any one of the claims 1 to 6, wherein the sample holder (30) is arranged to hold the one or more samples (70) at a bottom of the receptacle (40) in a vertical direction.

8. The microscope (1) of any one of the claims 1 to 7, wherein the receptacle (40) has a tube-like shape in the first direction (W).

9. The microscope (1) of any one of the claims 1 to 8, further comprising a device for chromatically separating and subsequently recombining light collected from the one or more samples (70).

10. The microscope (1) of any one of the claims 1 to 9, further comprising an electronic confocal slit for suppressing scattered light and enhancing an image contrast of imaging data.

11. The microscope (1) of any one of the claims 1 to 10, wherein the sample holder (30) is made of a material having a refractive index that matches a refractive index of at least one of the immersion medium (85) and the culture medium (75).

12. The microscope of any one of claims 1 to 11, further comprising a tunable acoustic gradient lens arranged in the illumination light path.

13. A method of imaging one or more samples (70), the method comprising
- accessing (800) a receptacle (40) of a sample holder (30) through an access channel (50) of the sample holder (30) for arranging one or more samples (70) in the receptacle (40), the access channel (50) having a wide end (50w) and a narrow end (50n), wherein in at least a first direction (W) the narrow end (50n) has a smaller dimension than the wide end (50w), the narrow end (50n) is fluidly connected to the receptacle (40), and the receptacle (40) is at least partially transparent to an illumination light beam and light collected from the one or more samples (70);
- arranging (810) the sample holder (30) in a microscope (1);
- illuminating (820) the one or more samples (70);
- collecting (830) light emitted from the one or more samples (70);
- imaging (840) the one or more samples (70).

14. The method of claim 13, further comprising culturing the one or more samples in the culture medium in the sample holder.

15. The method of claim 13 or 14, further comprising chromatically separating and subsequently recombining light collected from the one or more samples (70).

16. The method of any one of claims 13 to 15, further comprising suppressing scattered light and enhancing an image contrast of imaging data.

17. The method of any one of claim 13 to 16, further comprising accessing the one or more samples or the culture medium.

18. The method of any one of claims 13 to 17, further comprising scanning the illumination light beam.

19. The method of any of claims 13 to 18, further comprising moving (880) the sample holder (30) to further image the one or more samples (70).

20. Use of the microscope of claims 1 to 12 for imaging of live biological specimens, preferably mammalian cells and embryos.
